# EUROPÄISCHE PATENTSCHRIFT

(11) **EP 2 213 128 B1**
(45) Veröffentlichungstag und Bekanntmachung des Hinweises auf die Patenterteilung: **25.07.2012**
(21) Anmeldenummer: 08802635.6
(22) Anmeldetag: 25.09.2008
(51) Int. Cl.: H04W 48/18

(54) **VERFAHREN ZUM BETRIEB EINES ZELLULAREN MOBILFUNKNETZES**
METHOD FOR OPERATING A CELLULAR MOBILE RADIO NETWORK
PROCÉDÉ POUR FAIRE FONCTIONNER UN RESEAU DE RADIOCOMMUNICATION MOBILE CELLULAIRE

(30) Priorität: 23.11.2007 DE 102007056787
(43) Veröffentlichungstag der Anmeldung: 04.08.2010
(60) Teilanmeldung: 12002660.4
(73) Patentinhaber: Deutsche Telekom AG, 53113 Bonn (DE)
(72) Erfinder: VAN BUSSEL, Han, 53173 Bonn (DE); KLATT, Axel, 50996 Köln (DE)
(74) Vertreter: Cohausz Hannig Borkowski Wißgott
(86) Internationale Anmeldenummer: PCT/EP2008/008175
(87) Internationale Veröffentlichungsnummer: WO 2009/065461

(56) Entgegenhaltungen:
- WO-A-2007/009433
- US-A1- 2005 288 016
- "Digital cellular telecommunications system (Phase 2+); Radio subsystem link control (3GPP TS 45.008 version 7.9.0 Release 7); ETSI TS 145 008" ETSI STANDARDS, LIS, SOPHIA ANTIPOLIS CEDEX, FRANCE, Bd. 3-G1, Nr. V7.9.0, 1. Oktober 2007 (2007-10-01), XP014040326 ISSN: 0000-0001
- "Digital cellular telecommunications system (Phase 2+); Universal Mobile Telecommunications System (UMTS); Mobile radio interface Layer 3 specification; Core network protocols; Stage 3 (3GPP TS 24.008 version 7.9.0 Release 7); ETSI TS 124 008" ETSI STANDARDS, LIS, SOPHIA ANTIPOLIS CEDEX, FRANCE, Bd. 3-CN1, Nr. V7.9.0, 1. Oktober 2007 (2007-10-01), XP014039895 ISSN: 0000-0001 in der Anmeldung erwähnt

## Beschreibung

Die Erfindung betrifft ein Verfahren zum Betrieb eines ersten zellularen Mobilfunknetzes, das durch eine Kennung identifizierbar ist, wobei über eine Basisstation des ersten Mobilfunknetzes zu einem Mobilfunkendgerät eine Funkverbindung besteht, und ein zweites durch eine Kennung identifizierbares Mobilfunknetz derart benachbart zu dem ersten Mobilfunknetz liegt, dass eine zumindest teilweise räumliche Überlagerung der Funkreichweiten der beiden Mobilfunknetze vorliegt, wobei durch das Mobilfunkendgerät die Funksignalstärken von Basisstationen der momentan von dem Mobilfunkendgerät empfangbaren Mobilfunknetze an dem momentanen Standort des Mobilfunkendgerätes gemessen werden.

Die Erfindung betrifft insbesondere ein Verfahren zur Vermeidung von Versorgungslücken an Randbereichen (speziell an Ländergrenzen) eines zellularen Mobilfunksystems, beispielsweise nach GSM-, UMTS-, cdma2000-, E-UTRAN oder WiMAX, WiBro, UMB-Standard, welche nach dem heutigen Stand der Technik bei Verwendung von gleichen Frequenzen, beispielsweise an den Grenzen eines öffentlichen Mobilfunksystems (PLMN), an den jeweils gegenüberliegenden Seiten einer Landesgrenze entstehen würden, damit eine gegenseitige negative Beeinflussung aufgrund von Interferenz, speziell im Falle von Systemen nach den UMTS und E-UTRAN Standards ("reuse-1 Systemen"), vermieden werden kann.

Von Seiten der deutschen Bundesnetzagentur für Elektrizität, Gas, Telekommunikation, Post und Eisenbahnen (BNetzA) beispielsweise wird für den Betrieb von UMTS-Netzen in Deutschland und den jeweiligen Nachbarländem eine Begrenzung des Empfangspegels entlang der Außengrenzen der Bundesrepublik Deutschland verlangt, die auf beiden Seiten der Grenze jeweils zu einem bis ca. 6 km breiten Gebiet führen würde, welches nicht mit UMTS versorgt werden kann. Eine entsprechende Forderung wird auch im europäischen Rahmen in Dokumenten des ERC (European Radiocomms Committee ERC TG1) gefunden.

Diese Empfehlung der ERC stellt es den Mobilfunknetzbetreibern auf beiden Seiten der Landesgrenze jedoch frei, entweder die max. Empfangspegel einzuhalten oder eine Interferenz zwischen benachbarten Mobilfunknetzen auf anderem Wege zuverlässig zu verhindern.

Im Rahmen der UMTS-Standardisierung wurde in 3GPP das Konzept der "equivalent PLMNs" eingeführt. Mit dessen Hilfe ist es möglich, einem Mobilfunkendgerät (UE) neben dem Mobilfunknetz (PLMN) mit dem es z. Zt. registriert ist, weitere PLMN-Kennungen als "äquivalente PLMNs" mitzuteilen [vgl. 3GPP TS 24.008]. Diese (zusätzlichen) PLMNs werden vom Mobilfunkendgerät (UE) für cell selection (Netz- bzw. Zellauswahl), cell reselection (erneute Zellenauswahl) und Handover (Weitergabe an eine andere (Nachbar-)Zelle) behandelt als würden sie zu dem registrierten PLMN gehören.

Das Konzept ist u.a. dafür zu verwenden, einen nahtlosen Übergang eines Mobilfunkendgerätes von einem PLMN in ein anderes zu unterstützen. Dafür werden den Endgeräten im Grenzbereich zusätzlich zu den Nachbarzellen des eigenen PLMN die Nachbarzellen eines "befreundeten" PLMNs, beispielsweise eines kooperierenden oder desselben Netzbetreibers, (zu dem eine unterbrechungsfreie Serviceverfügbarkeit sichergestellt werden soll) mitgeteilt und durch eine entsprechende Signalisierung vom UE als äquivalent zu den Zellen des registrierten PLMNs betrachtet. Die Festlegung der äquivalenten PLMNs erfolgt auf Location/Routing Area (LA/RA) Basis und bei geeigneter Unterstützung durch das Netzwerk zusätzlich auch auf einer Subscriber-Basis. Als Beispiel für ein erstes Inlandsnetz, z.B. Deutschland würden in den Zellen, d.h. in den Local Areas (LAs) im Grenzgebiet zum Ausland, z.B. Österreich, die Nachbarzellen von einem zweiten Auslandsnetz eines kooperierenden Betreibers (oder desselben Betreibers) zusätzlich zu den Zellen des ersten Inlandsnetzes als potentielle Kandidaten für einen Zellwechsel signalisiert werden. Nach Konfiguration "Auslandsnetz äquivalent Inlandsnetz" würde für das Mobilfunkendgerät (User equipment = UE) der Übergang ("cell reselection") in das Nachbarnetz, d.h. das Auslandsnetz in Österreich, wie ein normaler Wechsel der Zelle (bzw. verschiedener LAs) innerhalb eines Netzes, d.h. innerhalb eines PLMNs aussehen und es würde nach dem Selektieren einer Zelle des Auslandsnetzes, d.h. des zweiten Mobilfunknetzes ein normales Location Area Update (LAU) durchführen und entsprechend mit dem Auslandsnetz registriert werden.

Der Wechsel in das Auslandsnetz erfolgt für ein Mobilfunkendgerät (UE) mit einer konfigurierten ePLMN-Liste (für welches also das zweite Mobilfunknetz, d.h hier das Auslandsnetz Österreich, äquivalent mit dem ersten Mobilfunknetz, Inlandsnetz Deutschland, gemacht wurde), in dem Moment wo eine Mobilfunkzelle des Auslandsnetzes (Österreich) eine bessere Radioqualität nach den von 3GPP vorgegebene Kriterien für Zellwechsel hat, als die aktuell genutzte Zelle des Inlandsnetzes (Deutschland). Ein Wechsel erfolgt somit in Abhängigkeit der Funksignalstärke (Netzintensität) am jeweiligen Standort des Mobilfunkendgerätes.

Dieses Prinzip stellt eine Art Grundprinzip für die Verschmelzung bzw. Zusammenlegung von Mobilfunknetzen mehrerer Anbieter bzw. grenzübergreifend dar. Neben dem Einsatz von "equivalent PLMN" an Landesgrenzen kommt dieses Verfahren heute vorzugsweise auch im Rahmen von nationalen Korporationen mehrerer Mobilfunk-Netzbetreiber zur Anwendung ("National Roaming").

Ein ähnliches Verfahren kommt auch im Falle eines Handover, d.h. einer Weitergabe einer bestehenden Mobilfunkverbindung (also während der Mobilfunkteilnehmer beispielsweise ein Gespräch führt (CELL_DCH in UMTS, HSPA) zwischen diesen beiden Netzen in Frage. Nachbarzellen, die als zu einem äquivalenten PLMN gehörig signalisiert werden, würden in den vom Netz angeordneten Messungen (bspw. mittels "MEASUREMENT CONTROL" Nachricht) genau wie normale Zellen betrachtet und in Measurement Reports zum RNC (Radio Network Controller, eine Kontrolleinheit mehrerer Zellen des Mobilfunknetzes) zur Auswertung gemeldet (falls die entsprechenden Bedingungen erfüllt sind -> "measurement events").

Der ETSI-Standard TS 145 008, V7.9.0 Digital cellular telecommunications System (Phase 2+); Radio subsystem link control "(3GPP TS 46.008 version 7.9.0 Release 7)", 1. Oktober 2007, offenbart ein Verfahren zum Betrieb eines Zellularen Mobilfunknetzes.

Die der Erfindung zugrunde liegende Aufgabe ist es, ein Verfahren bereitzustellen, welches es ermöglicht, eine Versorgungslücke an den Landesgrenzen zwischen zwei PLMNs zu vermeiden und somit die Servicequalität für die Mobilfunk-Kunden bis an die Landesgrenze heran sicherzustellen, wobei eine derartige Methode negative Auswirkungen, hervorgerufen durch die jeweiligen Mobilfunknetze (PLMNs), sowie auch die negative Beeinflussung anderer Mobilfunknetze (PLMNs), ausschließen muss.

Diese Aufgabe wird erfindungsgemäß durch ein Verfahren gemäß Anspruch 1 gelöst.

Hierdurch ist es möglich, dass zur Vermeidung von Versorgungslücken einerseits oder beiderseits einer Landesgrenze, bei Verwendung insbesondere in zellularen Mobilfunksystemen auf dem 3GPP Standard basierend, die Kenntnis der besten Empfangseigenschaften dazu genutzt wird, einen Verbindungsabbruch aktiv herbeizuführen bevor es in dem benachbarten zweiten Mobilfunknetz zu zu starken Interferenzen kommt, wodurch ein Mobilfunknetz derart ausgestaltet sein kann, dass bis zu einer Landesgrenze die benötigte Sendeleistung bereitgestellt wird, gleichzeitig aber Interferenzen zwischen den benachbarten Mobilfunknetzen vermieden werden.

Das erfindungsgemäße Verfahren ermöglicht es nunmehr, das nicht versorgte Gebiet zu beiden Seiten der Grenze überflüssig zu machen und einen wesentlich besser bis an den Grenzbereich ausgedehnte Serviceverfügbarkeit für die Kunden der Mobilfunknetzbetreiber auf beiden Seiten der Grenze sicherzustellen. Besonders wichtig bzw. vorteilhaft ist der Einsatz dieses Verfahrens in Gebieten, die aufgrund ihrer Bevölkerungsdichte (Ballungsräume) mit einer ausreichenden Netzabdeckung, d.h. mit UMTS oder dgl. versorgt werden müssen (für die Bundesrepublik Deutschland sind dieses z.B. die Städte Aachen, Passau, Lindau, Frankfurt/O.), aber auch an Grenzübergängen von Autobahnen bzw. Flughäfen in Grenznähe (Kopenhagen, Genf), die mit höherer Wahrscheinlichkeit ebenfalls z.B. mit UMTS oder dgl. versorgt werden sollen und naturgemäß schnell Kapazitätsengpässe aufweisen. Eine grundsätzliche Anwendung des Verfahrens entlang der gesamten mit Mobilfunk versorgten Landesgrenzen ist möglich und sinnvoll. Weiterhin ist das erfindungsgemäße Verfahren nicht auf die Anwendung in Systemen nach UMTS-Standard beschränkt. Ein Einsatz dieses Verfahrens ist insbesondere auch bei einem Aufbau von neuartigen zellularen Mobilfunknetzen nach E-UTRAN Standards sinnvoll und vorteilhaft.

Weitere vorteilhafte Ausgestaltungen der Erfindung sind in den Unteransprüchen angegeben.

Erfindungsgemäß wird durch das erste Mobilfunknetz ein Abbruch der Funkverbindung zu dem Mobilfunkendgerät durchgeführt, wenn die Funksignalstärke des benachbarten zweiten Mobilfunknetzes einen festlegbaren Schwellwert überschreitet oder größer ist, als die Funksignalstärke des ersten Mobilfunknetzes.

Dadurch ist es möglich, dass einem Mobilfunkendgerät (UE) in einer aktiven Verbindung (beispielsweise CELL_DCH in UMTS oder LTE_ACTIVE in E-UTRAN) die Nachbarzellen des benachbarten PLMNs mitgeteilt werden und bei Erreichen eines eingestellten Schwellwertes (z.B. die Zelle des benachbarten PLMN ist etwa gleich stark wie die beste des aktuellen PLMNs), kein Handover, d.h. keine Übergabe in diese Zelle getriggert wird, sondern dieser Messreport den Abbruch des Gespräches/der Datenverbindung auslöst und somit die Interferenz gegen Zellen des benachbarten PLMNs verhindert wird.

Bevorzugt ist das erste Mobilfunknetz aus einer Vielzahl von Zellen gebildet, wobei jeweils eine bestimmte Anzahl von Zellen von einer übergeordneten Kontrolleinheit gesteuert wird und eine Auswertung der von dem Mobilfunkendgerät übermittelten Funksignalstärken und der zugehörigen Netzkennungen durch die Kontrolleinheit erfolgt. Eine alternative Ausgestaltung ermöglicht die Anwendung des Verfahrens in Zellen eines Mobilfunknetzes, wobei die eigentliche Kontrolle in der Basisstationseinheit durchgeführt wird.

Vorzugsweise ist das erste Mobilfunknetz aus einer Vielzahl von Zellen gebildet und es erfolgt eine Auswertung der von dem Mobilfunkendgerät übermittelten Funksignalstärken und der zugehörigen Netzkennungen durch eine dezentrale Kontrolleinheit.

Bevorzugt unterbricht das erste Mobilfunknetz eine aktive Verbindung mit einem Mobilfunkendgerät, sobald eine Zelle des zweiten Mobilfunknetzes mit besserer Qualität oder mit einer Qualität über einem definierten Schwellwert vom Mobilfunkendgerät gemeldet wird.

Des weiteren betrifft die Erfindung ein Computerprogrammprodukt umfassend ein auf einer Recheneinheit lauffähiges Computerprogramm, welches das erfindungsgemäße Verfahren nach einem der Ansprüche 1 bis 5 durchführt, wenn es auf einer Recheneinheit ausgeführt wird, insbesondere auf einer Recheneinheit einer Kontrolleinheit oder dergleichen eines Mobilfunknetzes, insbesondere einer Radionetzwerk-Kontrolleinheit (bspw. einem RNC oder einem eNB) oder einem Core Netzwerkknoten (bspw. einem SGSN oder einer MME).

Die Erfindung wird nachfolgend anhand von Figuren erläutert. Es zeigen:
- Fig. 1:: Eine schematische Darstellung der Interferenz zweier benachbarter Mobilfunknetze;
- Fig. 2:: den Verlauf der Funksignalstärke (Netzintensität) im Grenzbereich zwischen zwei benachbarten Mobilfunknetzen und den Bereich eines Gesprächsabbruchs ohne äquivalente Netze (PLMN);
- Fig. 3:: den Verlauf der Funksignalstärke (Netzintensität) im Grenzbereich zwischen zwei benachbarten Mobilfunknetzen und den Bereich ohne Versorgung bei Einhaltung des Mindestabstandes zur Grenze;
- Fig. 4:: den Verlauf der Funksignalstärke (Netzintensität) im Grenzbereich zwischen zwei benachbarten Mobilfunknetzen und den Bereich eines Gesprächsabbruchs bei Nutzung äquivalenter Netze (ePLMN)

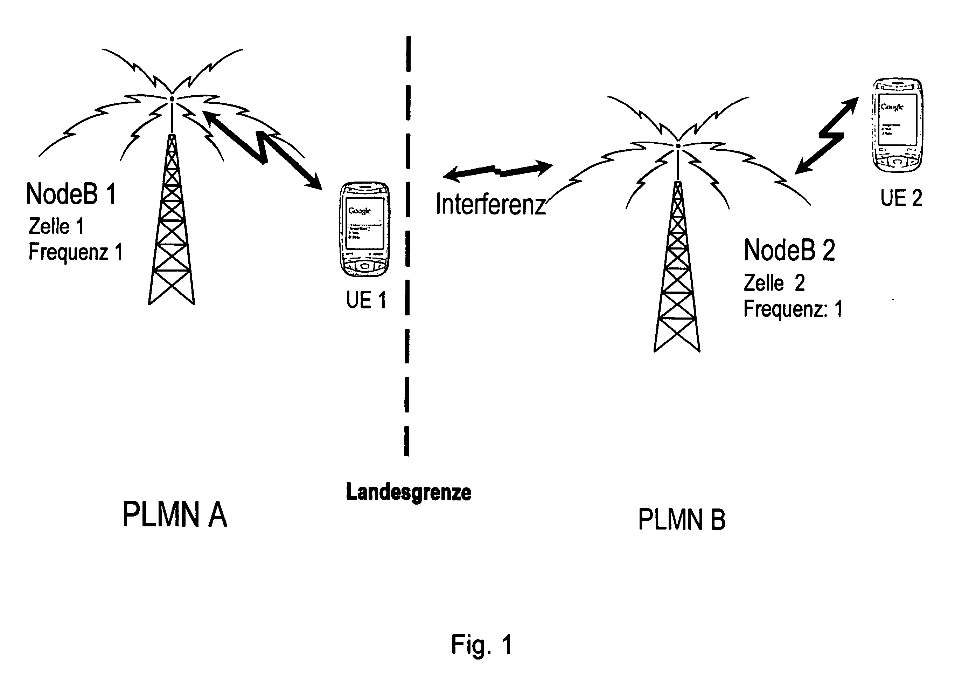

In Figur 1 dargestellt ist die grundsätzliche Problematik im Grenzbereich zwischen zwei benachbarten Mobilfunknetzen (PLMNs), wobei bei Nutzung derselben Frequenz "1" beider Netze zu jeweils einem Mobilfunkendgerät, UE1 im ersten Netz und UE2 im zweiten Netz, Interferenzen auftreten können.

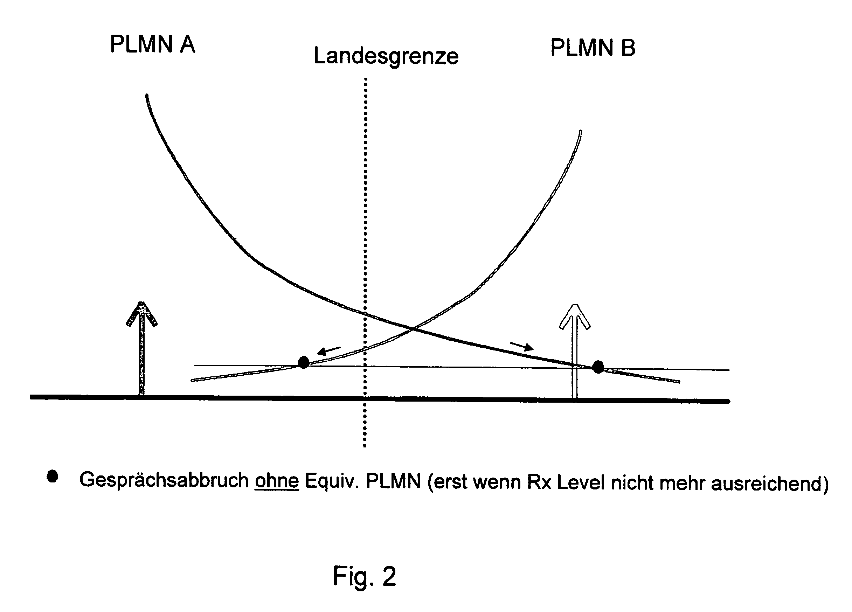

Legt man die Netze so aus, dass eine Netzabdeckung, d.h. eine ausreichende Funksignalstärke bis an die Grenze, z.B. Landesgrenze, gegeben sein soll, so können ohne die Nutzung des Prinzips der äquivalenten Netze (ePLMN), wie in Figur 2 dargestellt, Interferenzen auftreten und ein Gesprächsabbruch erfolgt erst hinter der Grenze, wenn die Funksignalstärke (Netzintensität) zu schwach wird und bereits Interferenzen gegen das Nachbametz kreiert werden.

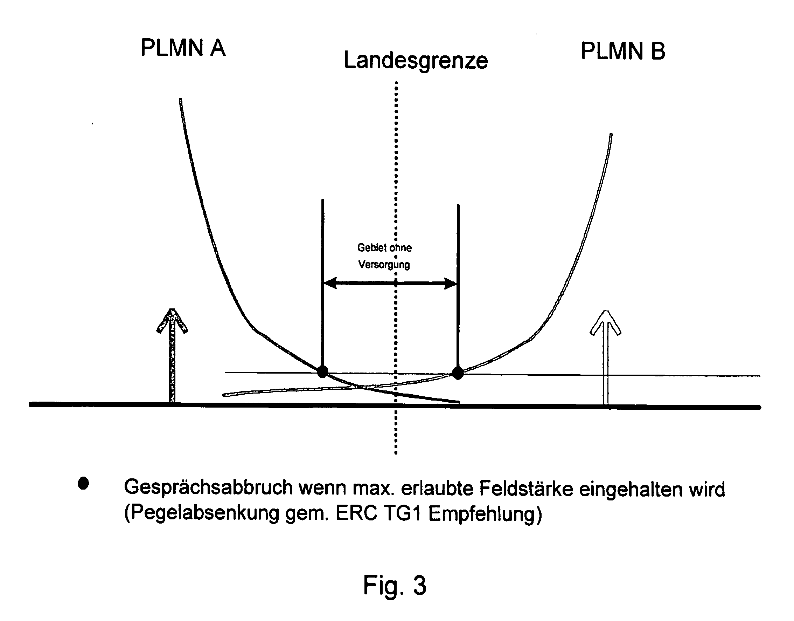

Alternativ hierzu können zur Vermeidung von Interferenzen im Grenzbereich zwischen zwei benachbarten Mobilfunknetzen die Sendeleistungen respektive die Konfigurationen der Zellen im Grenzbereich wie in Figur 3 dargestellt gewählt werden, d.h. dass beidseitig ein entsprechender Abstand zur Grenze eingehalten wird, mit der Folge eines sehr breiten Streifen entlang der Grenze ohne Funknetzversorgung.

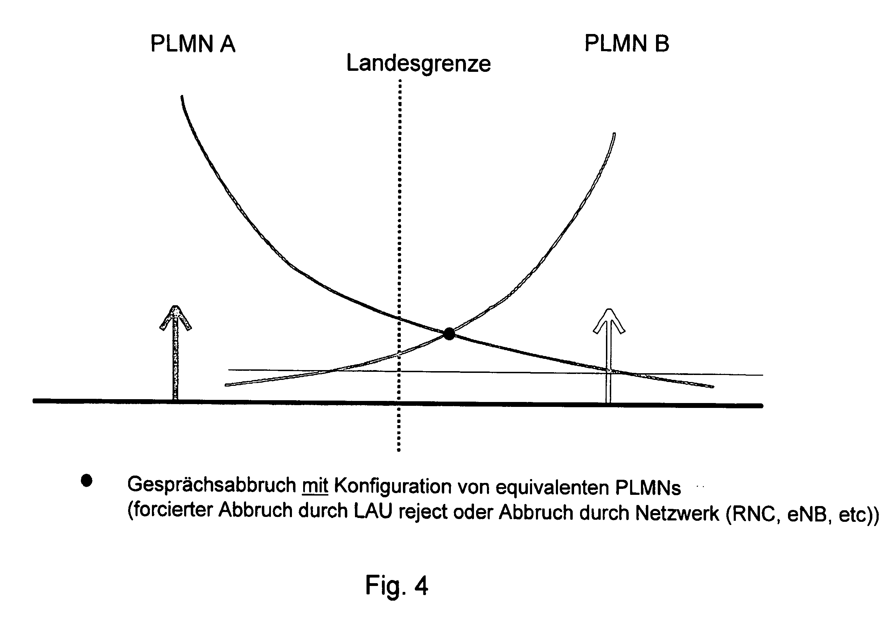

Um die negativen Auswirkungen der Grenzkoordinierung/Nichtversorgung, wie dies von der BNetzA und dem ERC verlangt wird (bis ca. 12 km Streifen ohne UMTS-Versorgung entlang der Landesgrenze) zu vermeiden, kann das Konzept der äquivalenten PLMNs (ePLMN - equivalent Public Land Mobile Network) ebenfalls eingesetzt und nach dem erfindungsgemäßen Verfahren erweitert werden. Hierzu ist jedoch eine Koordinierung der Netzbetreiber beiderseits der Grenze notwendig, auch wenn ein gegenseitiges Handover (Verbindungsübergabe) ggf. aus kommerziellen, regulatorischen oder strategischen Gründen nicht erwünscht oder nicht zulässig ist. Der intelligente Einsatz des äquivalenten PLMN-Konzepts ermöglicht jedoch eine Versorgung durch UMTS oder dgl. bis an die Landesgrenze und den definierten Abbruch einer Verbindung, damit eine Störung (Interferenz) des benachbarten Betreibers durch (Uplink-) Interferenz des UE vermieden wird, wie dies in Figur 4 dargstellt ist.

Im Bereich der (Landes-) Grenzen werden die Zellen des auf der gegenüberliegenden Seite operierenden Netzbetreibers gegenseitig auf den System Information Blocks (SIB) des Broadcast Channels (BCCH) ausgestrahlt und die PLMN-Identities beider Netzbetreiber in den Location Areas (LA) entlang der Grenze dem Endgerät als äquivalente PLMNs (ePLMN) mitgeteilt.

Im Falle der Kooperation zweier Mobilfunknetzbetreiber beiderseits der Grenze bedarf es der Konfiguration der notwendigen Informationen des ePLMN und der Eintragung der jeweiligen Nachbarschaftsbeziehungen (Nachbarzellen), um bei Überschreitung der Grenze die bestehende Mobilfunkverbindung an das benachbarte Mobilfunknetz zu übergeben (Handover), wie dies im obigen Beispiel zwischen einem ersten deutschen Netz und einem zweiten österreichischen Netz dargestellt ist.

Da aber ein gezieltes Zusammenarbeiten der Netzbetreiber beiderseits der Grenze nicht immer gewünscht ist, kann auch im Falle des nicht gewünschten Übergangs in das entsprechende Netz des Mobilfunkbetreibers auf der anderen Seite der Grenze diese Netze den Mobilfunkendgeräten signalisiert werden und das nachfolgende Location Area Update (LAU) abgewiesen wird, sobald sich das Mobilfunkendgerät (UE) auf der nach den von 3GPP vorgegebenen Kriterien funktechnisch besseren Zelle jenseits der Grenze befindet. Durch die Anwendung dieses Verfahrens wird der Nichtversorgungs-Bereich unnötig, da sich ein UE bis zum Erreichen der Grenze (basierend auf Planungsvorgaben und Netzparametrisierung) auf der Zelle des ursprünglichen PLMN befindet und mit dem Wechsel über die Grenze auf die funktechnisch beste Zelle des Nachbarlandes wechselt (Figur 4) und dann durch eine Abweisung (durch einen "LAU reject") der Zugang zu dem neuen Netz verwehrt wird. Erweiternd erzwingt ein entsprechender "cause value" des "LAU reject" schließlich eine Auswahl eines anderen PLMNs (des Nachbarlandes) um dem Benutzer nach dem Wechsel in das andere Land einen Dienst zu Verfügung stellen zu können.

Ein Anwendungs-Beispiel zur Anwendung des Verfahrens ist ein Benutzer eines Mobilfunkbetreibers A-Deutschland (HPLMN), der in den Niederlanden das Netz von Betreiber B-Netherlands (VPLMN) genutzt hat und sich geografisch in Richtung der Grenze Deutschlands bewegt: Dieser wird durch die Zuweisung
<B-Netherlands äquivalent B-Deutschland>
an der Grenze in die funktechnisch beste Zelle wechseln (von Betreiber B-Deutschland) dort aber, da er typischerweise (mit Ausnahme National Roaming) keinen Zugang in das Netz von Betreiber B-Deutschland hat, durch einen "LAU reject" abgelehnt, und kann damit keine zusätzlich Interferenz gegen das Netz von Betreiber B-Deutschland generieren. Die verursachte Interferenz ist nicht höher als der Normalfall, wenn eine Zelle vom eigenen Netz Nachbarzelle wäre. Über die optionale Anwendung der von 3GPP spezifizierte PLMN Selection (nach einem entsprechenden "LAU reject cause" [3GPP TS 24.008]) wird das Mobilfunkendgerät (UE) in sein Heimatnetz, z.B. das Netz A-Deutschland von Betreiber A geschickt.

Dieses Beispiel zeigt, dass durch die Anwendung des Verfahrens ein "sanfter" Übergang zwischen des PLMNs verschiedener Länder möglich ist, der Bereich der Nichtversorgung zur Vermeidung von Interferenz vermieden werden kann und zudem eine gezielte Steuerung des Zugangs/Nichtzugangs zu den jeweiligen PLMNs realisiert werden kann.

Generell lässt sich eine Ausprägung des Verfahrens besonders vorteilhaft auch für den Fall eines aktiven Gesprächs während des Übergangs zwischen zwei PLMNs/Ländern einsetzen:
Durch die Konfiguration der jeweiligen Nachbarzellen beiderseits der Grenze und ggf. zusätzlich die Zuweisung, dass beide PLMNs äquivalent sind, werden während eines Gespräches (CELL_DCH in UMTS) die Zellen des jeweils anderen Betreibers ebenfalls durch das Mobilfunkendgerät (UE) ausgewertet und die Messergebnisse dem Serving RNC (SRNC) des jeweils versorgenden Netzes mitgeteilt.

Zur Vermeidung der Interferenz beim Übergang zwischen den PLMNs ist im RNC (Radio Network Controller = Kontrolleinheit) oder eNB (im Fall von E-UTRAN) ein Algorithmus gem. dem erfindungsgemäßen Verfahren zu implementieren, welcher die Zellen (Cell Identities) des jeweils anderen Betreibers kennt, für diese Messungen durch das Mobilfunkendgerät (UE) konfiguriert und eintreffende Messergebnisses des UEs auswertet, wann eine Zelle, die nicht zum eigenen PLMN gehört, eine bessere (Funk-)Qualität hat als die stärkste eigene Zelle. Sobald eine Zelle des Nachbarnetzes (PLMN) einen höheren Pegel/Funkqualität besitzt als die stärkste Zelle des eigenen Netzes, d.h. also immer dann wenn normalerweise ein Handover (Übergabe) stattfinden würde, entscheidet der SRNC oder der serving eNB, dass das Gespräch zu unterbrechen ist (beispielsweise durch Senden einer RRC CONNECTION RELEASE Nachricht in UMTS-Systemen). Hierdurch wird das Gespräch aktiv unterbrochen noch bevor es zu einer erhöhten Interferenz auf die Zellen des Nachbarlandes kommen kann, eine Versogung jedoch bis and die Landesgrenze hin sichergestellt ist.

Alternativ kann natürlich, wie im Falle eine "befreundeten" PLMNs üblich, ein Handover in das Netz des Nachbarlandes erfolgen (ggf. auch auf eine andere Frequenz).

Die Anwendung dieses Verfahrens ist nicht auf eine Anwendung in UMTS mit dedizierten Kanälen (R'99 DCHs) beschränkt, sondern kann entsprechend bei Netzkontrolle der Terminal-Mobilität auch von HSPA oder E-UTRAN Netzen ausgeführt werden. Die Anwendung des erfindungsgemäßen Verfahrens ist nicht auf die oben genannten Beispiele beschränkt, sondern prinzipiell mit allen zellularen Mobilunksystem gleich welchem Standards durchführbar.

Das Verfahren ist in Figur 4 illustriert: Ein Mobilfunkendgerät, UE, welches sich von einem ersten Mobilfunknetz PLMN A in Richtung eines zweiten Mobilfunknetzes PLMN B (also von links nach rechts) bewegt, soll an der Stelle das Gespräch verlieren, an der die Zelle des PLMN B stärker wird als die (serving) Zelle des PLMN A. Normalerweise würde eine Unterbrechung des Gesprächs erst beim Erreichen des minimalen Empfangspegels (dünne schwarze Linie) jenseits der Landesgrenze erfolgen (dargestellt in Figur 4).

Hier wäre aber die auftretende Interferenz für das PLMN B durch das UE, welches noch mit dem NodeB (Basisstation) des PLMN A in Verbindung steht, so groß, dass es zu einer erheblichen Störung dieser Zelle kommen würde (vgl. Figur 1).

Dieses Problem ("near-far problem") ist besonders bei CDMA-Netzen (z.B. UMTS) oder generell bei "reuse-1 Funksystemen" wie auch E-UTRAN von großer Bedeutung, da durch die Interferenz die Qualität sämtlicher Verbindungen in der gestörten Zelle des PLMN B sinken würde.

Das Erfindungsgemäße Verfahren muss nicht zwangsläufig auf beiden Seiten der Grenze (also in beiden PLMNs) implementiert werden. Als Konsequenz könnte das PLMN, welches dieses Verfahren nicht implementiert, seine eigene Versorgung aber nicht wie oben beschrieben erweitern, sondern müsste einseitig die Pegelabsenkung wie in [ERC REC 01-01] beschrieben absenken, um eine Störung anderer Mobilfunksysteme zu vermeiden.

## Patentansprüche

1. Verfahren zum Betrieb eines ersten zellularen Mobilfunknetzes (PLMN A), durch eine Kennung identifizierbar ist, wobei über eine Basisstation (NodeB 1) des ersten Mobilfunknetzes (PLMN A) zu einem Mobilfunkendgerät (UE 1) eine Funkverbindung besteht, und ein zweites durch eine Kennung identifizierbares Mobilfunknetz (PLMN B) derart benachbart zu dem ersten Mobilfunknetz (PLMN A) liegt, dass eine zumindest teilweise räumliche Überlagerung der Funkreichweiten der beiden Mobilfunknetze (PLMN A, PLMN B) vorliegt, wobei durch das Mobilfunkendgerät (UE 1) die Funksignalstärken von Basisstationen (NodeB 1, NodeB 2) der momentan von dem Mobilfunkendgerät (UE 1) empfangbaren Mobilfunknetze (PLMN A, PLMN B) an dem momentanen Standort des Mobilfunkendgerätes (UE 1) gemessen werden und diese von dem Mobilfunkendgerät (UE 1) gemessenen Funksignalstärken und die dazugehörigen Kennungen des jeweiligen Mobilfunknetzes (PLMN A, PLMN B) dem ersten Mobilfunknetz (PLMN A) zur Auswertung übermittelt werden, wobei durch das erste Mobilfunknetz (PLMN A) ein Abbruch einer aktiven Funkverbindung zu dem Mobilfunkendgerät (UE 1) durchgeführt wird, wenn die gemessene Funksignalstärke einer Basisstation (NodeB 2) des benachbarten zweiten Mobilfunknetzes (PLMN B) einen festlegbaren Schwellwert überschreitet oder größer ist, als die gemessene Funksignalstärke der Basisstation (NodeB 1) des ersten Mobilfunknetzes (PLMN A).

2. Verfahren nach Anspruch 1, **dadurch gekennzeichnet, dass** das zweite Mobilfunknetz (PLMN B) als äquivalent gekennzeichnet ist.

3. Verfahren nach Anspruch 1, **dadurch gekennzeichnet, dass** das erste Mobilfunknetz (PLMN A) aus einer Vielzahl von Zellen gebildet ist, wobei jeweils eine bestimmte Anzahl von Zellen von einer übergeordneten Kontrolleinheit gesteuert wird und eine Auswertung der von dem Mobilfunkendgerät (UE 1) übermittelten Funksignalstärken und der zugehörigen Netzkennungen durch die Kontrolleinheit erfolgt.

4. Verfahren nach Anspruch 2, **dadurch gekennzeichnet, dass** die Kontrolleinheit ein Radio Network Controller oder ein evolved NodeB ist.

5. Verfahren nach Anspruch 2 oder 3, **dadurch gekennzeichnet, dass** die Kontrolleinheit eine Verbindungsabbruch-Nachricht sendet.

6. Computerprogrammprodukt umfassend ein auf einer Recheneinheit lauffähiges Computerprogramm, welches das Verfahren nach einem der vorherigen Ansprüche durchführt, wenn es auf einer Recheneinheit ausgeführt wird, insbesondere auf einer Recheneinheit einer Kontrolleinheit oder dergleichen eines Mobilfunknetzes (PLMN A).

## Claims

1. Method for the operation of a first cellular mobile radio network (PLMN A) which can be identified by an identifier, wherein there is a radio link to a mobile radio terminal (UE 1) via a base station (NodeB 1) in the first mobile radio network (PLMN A), and a second mobile radio network (PLMN B) which can be identified by an identifier is situated adjacently to the first mobile radio network (PLMN A) such that there is an at least partial physical overlap between the radio ranges of the two mobile radio networks (PLMN A, PLMN B), wherein the mobile radio terminal (UE 1) measures the radio signal strengths of base stations (NodeB 1, NodeB 2) in the mobile radio networks (PLMN A, PLMN B) which can currently be received by the mobile radio terminal (UE 1) at the current location of the mobile radio terminal (UE 1), and these radio signal strengths measured by the mobile radio terminal (UE 1) and the associated identifiers of the respective mobile radio network (PLMN A, PLMN B) are transmitted to the first mobile radio network (PLMN A) for evaluation, wherein the first mobile radio network (PLMN A) terminates an active radio link to the mobile radio terminal (UE 1) when the measured radio signal strength of a base station (NodeB 2) in the adjacent second mobile radio network (PLMN B) exceeds a stipulatable threshold value or is greater than the measured radio signal strength of the base station (NodeB 1) in the first mobile radio network (PLMN A).

2. Method according to Claim 1, **characterized in that** the second mobile radio network (PLMN B) is flagged as equivalent.

3. Method according to Claim 1, **characterized in that** the first mobile radio network (PLMN A) is formed from a multiplicity of cells, wherein a respective particular number of cells are controlled by a superordinate control unit, and evaluation of the radio signal strengths transmitted by the mobile radio terminal (UE 1) and of the associated network identifiers is effected by the control unit.

4. Method according to Claim 2, **characterized in that** the control unit is a radio network controller or an evolved NodeB.

5. Method according to Claim 2 or 3, **characterized in that** the control unit sends a connection termination message.

6. Computer program product comprising a computer program which is executable on a computation unit and which performs the method according to one of the preceding claims when it is executed on the computation unit, particularly on a computation unit in a control unit or the like in a mobile radio network (PLMN A).

## Revendications

1. Procédé de mise en fonctionnement d'un premier réseau mobile cellulaire (PLMN A) qui peut être identifié par un identificateur, dans lequel une liaison de radiocommunication est établie par l'intermédiaire d'une station de base (NoeudB 1) du premier réseau de radiocommunication mobile (PLMN A) avec un terminal de radiocommunication mobile (UE 1), et dans lequel un second réseau de radiocommunication mobile (PLMN B) pouvant être identifié par un identificateur se situe dans le voisinage du premier réseau de radiocommunication mobile (PLMN A) de telle manière qu'il se produise une superposition spatiale au moins partielle des portées radio des deux réseaux de radiocommunication mobiles (PLMN A, PLMN B), dans lequel les intensités des signaux radio des stations de base (NoeudB 1, NoeudB 2) des réseaux de radiocommunication mobiles (PLMN A, PLMN B) pouvant être reçus à l'instant présent par le terminal de radiocommunication mobile (UE 1) sont mesurées par le terminal de radiocommunication mobile (UE 1) à l'instant présent à l'emplacement du terminal de radiocommunication mobile (UE 1) et ces intensités de signaux radio mesurées par le terminal de radiocommunication mobile (UE 1) et les identificateurs associés du réseau de radiocommunication mobile respectif (PLMN A, PLMN B) sont transmis au premier réseau de radiocommunication mobile (PLMN A) pour y être évalués, dans lequel une interruption d'une liaison radio active avec le terminal de radiocommunication mobile (UE 1) est effectuée par le premier réseau de radiocommunication mobile (PLMN A) lorsque l'intensité des signaux radio mesurée d'une station de base (NoeudB 2) du second réseau de radiocommunication mobile voisin (PLMN B) dépasse ou est supérieure à un seuil réglable en tant qu'intensité de signal radio mesurée de la station de base (NoeudB 1) du premier réseau de radiocommunication mobile (PLMN A) .

2. Procédé selon la revendication 1, **caractérisé en ce que** le second réseau de radiocommunication mobile (PLMN B) est caractérisé comme étant équivalent.

3. Procédé selon la revendication 1, **caractérisé en ce que** le premier réseau de radiocommunication mobile (PLMN A) est constitué d'une pluralité de cellules, un nombre déterminé respectif de cellules étant commandé par une unité de commande de niveau supérieur et une évaluation des intensités des signaux radio transmises par le terminal de radiocommunication mobile (UE 1) et des identificateurs de réseau associés étant effectuée par l'unité de commande.

4. Procédé selon la revendication 2, **caractérisé en ce que** l'unité de commande est un contrôleur de réseau radio ou un NoeudB évolué.

5. Procédé selon la revendication 2 ou 3, **caractérisé en ce que** l'unité de commande émet un message d'interruption de liaison.

6. Produit de programme informatique comprenant un programme informatique exécutable sur une unité informatique mettant en oeuvre le procédé selon l'une quelconque des revendications précédentes lorsqu'il est exécuté sur une unité informatique, notamment sur une unité informatique d'une unité de commande ou autre d'un réseau de radiocommunication mobile (PLMN A).
